# EUROPEAN PATENT APPLICATION

(11) **EP 3 315 380 A1**
(43) Date of publication of application: **02.05.2018**
(21) Application number: 16851332.3
(22) Date of filing: 21.09.2016
(51) Int. Cl.: B62D 1/184, B62D 1/187, B62D 1/189

(54) **POSITION ADJUSTING APPARATUS FOR STEERING WHEEL**

(30) Priority: 29.09.2015 JP 2015191604
(71) Applicant: NSK Ltd., Tokyo 141-8560 (JP)
(72) Inventor: KUROKAWA Yoshifumi, Maebashi-shi Gunma 371-8527 (JP)
(74) Representative: Naylor, Matthew John
(86) International application number: PCT/JP2016/077912
(87) International publication number: WO 2017/057158

(57) **Abstract**

In a steering wheel position adjusting device, an inner side surface of a support plate part (19a) includes a pair of protrusion parts (31a, 31b), which are positioned on both sides of the pressed-part back surfaces (24a) in a front-rear direction and interpose the pressed-part back surfaces (24a), the pressed-part back surface (24a) is positioned on a back side of a portion where the outer side surface of the support plate part (19) is pressed by a driven-side cam (35) , and only tip end surfaces of the protrusion parts (31a, 31b) are changed from an unclamped state to a clamped state. In clamped state, the tip end surfaces of the protrusion parts (31a, 31b) and the pressed-part back surfaces (24a) are pressed against an outer side surface of a displacement bracket (16a).

## Description

### TECHNICAL FIELD

The present invention relates to an improvement of a steering wheel position adjustment device for adjusting a position of the steering wheel according to a physique or a driving posture of a driver.

### BACKGROUND ART

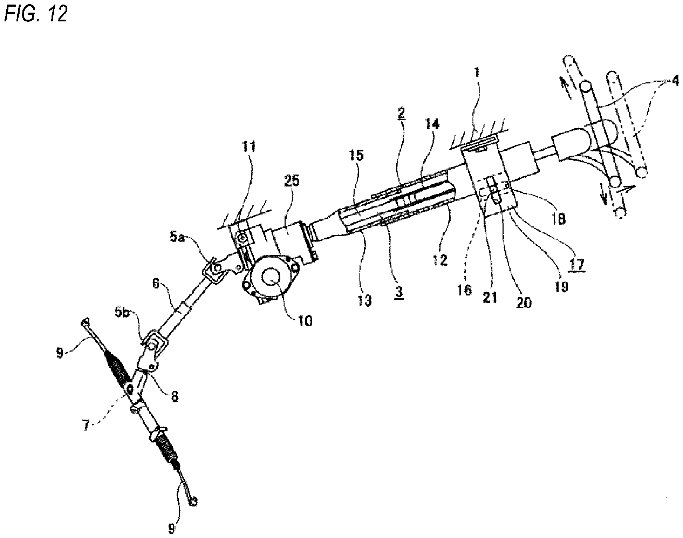

As an automobile steering device, for example, a structure as shown in FIG. 12 has been widely known. In this steering device, a steering shaft 3 is rotatably supported on an inner diameter side of a cylindrical steering column 2 which is supported on a vehicle body 1. A steering wheel 4 is fixed to a rear end portion of the steering shaft 3 protruding rearward from a rear end opening of the steering column 2. If the steering wheel 4 is rotated, the rotation thereof is transmitted to an input shaft 8 of a steering gear unit 7 through the steering shaft 3, a universal joint 5a, an intermediate shaft 6 and a universal joint 5b. If the input shaft 8 rotates, a pair of tie rods 9, 9 arranged on both sides of the steering gear unit 7 are pushed and pulled, whereby a steering angle according to an operation amount of the steering wheel 4 is provided to a pair of left and right steering wheels. Further, an example shown in drawings is an electric power steering device which uses an electric motor 10 as an auxiliary power source to reduce a force necessary for operating the steering wheel 4. In this specification and claims, a front-rear direction, a width direction (left-right direction), and an upper-lower direction refers to a front-rear direction, a width direction (left-right direction), and an upper-lower direction of a vehicle, unless particularly otherwise mentioned.

In a case of a structure as shown in drawings, the steering device includes a tilt mechanism for adjusting an upper-lower position (tilt position) of the steering wheel 4 and a telescopic mechanism for adjusting a front-rear position (telescopic position) of the steering wheel 4 according to a physique and a driving posture of a driver. In order to configure the tilt mechanism, the steering column 2 is supported to the vehicle body 1 so as to be able to pivotably displaceable about a pivot shaft 11 mounted in the width direction. In order to configure the telescopic mechanism, the steering column 2 has a structure where an outer column 12 provided on a rear side and an inner column 13 provided on a front side are telescopically combined, and the steering shaft 3 has a structure where an outer shaft 14 in the rear side and an inner shaft 15 in a front side are combined to transmit torque and to be telescopic by a spline engagement and the like.

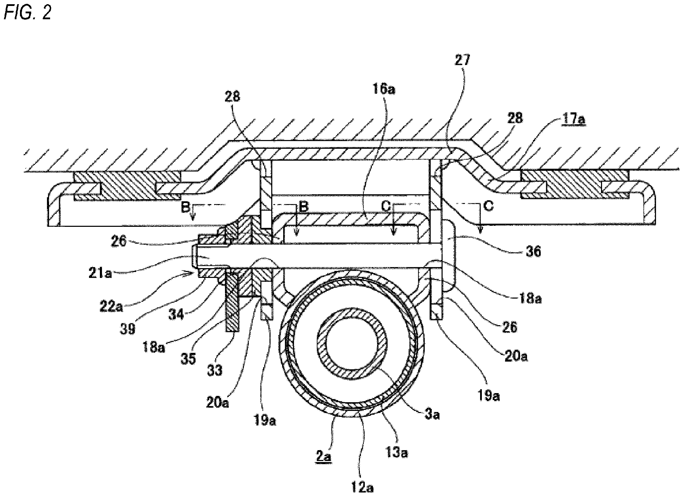

A displacement bracket 16 fixedly provided on a rear end side portion of the outer column 12 is supported to a support bracket 17, which is supported to the vehicle body 1, so as to be displaceable in the upper-lower direction and the front-rear direction. The displacement bracket 16 is formed with displacement-side through holes 18, which are long in the front-rear direction (an axial direction of the outer column 12) which is a telescopic position adjustment direction. A support bracket 17 includes a pair of support plate parts 19 which interpose the displacement bracket 16 therebetween from both sides in the width direction. At portions of both support plate parts 19 which match with each other, fixing-side through holes 20 which are long in the upper-lower direction which is a tilt position adjustment direction are separately formed. Each fixing-side through hole 20 generally has a partial arc shape having the pivot shaft 11a as a center. An adjustment rod 21 is inserted into the fixing-side through holes 20 and the displacement-side through holes 18. The adjustment rod 21 is provided with a pair of pressing members in a state where the pressing members interpose the both support plate parts 19 therebetween from both sides in the width direction, and an interval between the both pressing members can be expanded and contracted by a cam device which operates based on an operation of an adjustment lever (for example, refer to FIG. 2 to be described later).

When adjusting an upper-lower position or a front-rear position of the steering wheel 4, the adjustment lever is rotated in a predetermined direction, thereby expanding the interval between the pressing members so as to be an unclamped state. Accordingly, frictional force acting between inner side surfaces of the support plate parts 19 and outer side surfaces of displacement bracket 16 is reduced. At this state, within a range where the adjustment rod 21 can be displaced in the fixing-side through holes 20 and the displacement-side through holes 18, a position of the steering wheel 4 is adjusted. After the adjustment, the adjustment lever is rotated in a reverse direction of the predetermined direction, thereby contracting the interval between the pressing members so as to be a clamped state. Accordingly, the frictional force is increased to hold the steering wheel 4 at an adjusted position.

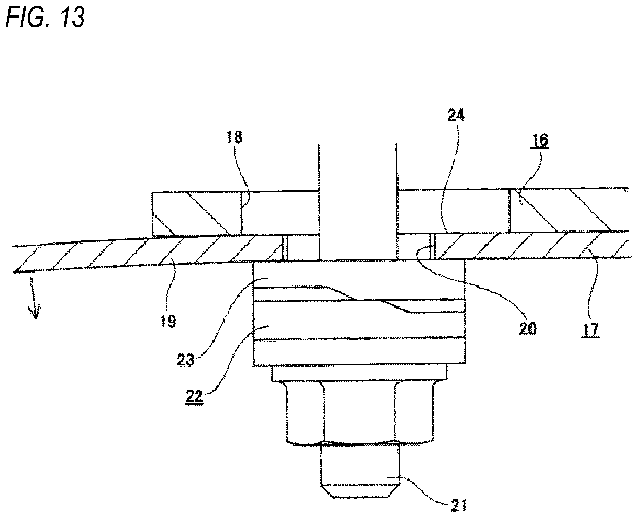

In a steering device including a position adjusting device for a steering wheel, in order to enhance the support rigidity of the displacement bracket with respect to the support bracket, as disclosed in, for example, Patent Document 1, a structure has been considered which ensures that an inner side surface of support plate part having a flat surface shape is brought into contact with an outer side surface of a displacement bracket having a flat surface shape and an contact area of both side surfaces is large. However, when such a structure is adopted, as shown in FIG. 13, there is a possibility that the support plate parts 19 configuring the support bracket 17 are deformed based on pressing force of a driven-side cam 23 functioning as a pressing member when an axial dimension of the cam device 22 is expanded. Specifically, there is a possibility that portions of the support plate parts 19 except from the portions (peripheral portions) pressed by the driven-side cam 23 is warped and deformed (deformed so as to reduce force) in a direction away from the outer side surfaces of the displacement bracket 16 as indicated by an arrow in FIG. 13. Accordingly, only pressed-part back surfaces 24, which are positioned on back sides of portions where outer side surfaces are pressed by the driven-side cam 23, of inner side surfaces of the support plate parts 19 are strongly pressed against the outer side surfaces of the displacement bracket 16. Therefore, it is difficult to ensure a large contact area between the outer side surfaces of the displacement bracket 16 and the inner side surfaces of the support plate parts 19, and it is difficult to sufficiently enhance the support rigidity of the displacement bracket 16 with respect to the support bracket 17.

### BACKGROUND ART DOCUMENT

### PATENT DOCUMENT

Patent Document 1: JP-A-2005-1546

### SUMMARY OF THE INVENTION

### PROBLEM TO BE SOLVED

The present invention has been made in view of the above described circumstances, and an object is to realize a steering wheel position adjustment device which can enhance support rigidity of a displacement bracket with respect to a support bracket.

### MEANS FOR SOLVING THE PROBLEMS

A steering wheel position adjusting device of the present invention includes a steering column, a displacement bracket, a support bracket and a pair of pressing members.

The steering column has a tubular (for example, cylindrical) shape and rotatably supports a steering shaft, which supports and fixes a steering wheel at a rear end portion of the steering shaft, to an inner side of the steering column.

The displacement bracket is provided (for example, fixedly provided) to the steering column.

The support bracket has a pair of support plate parts which are supported to a vehicle body and interpose the displacement bracket therebetween from both sides in a width direction.

The two pressing members are arranged on both sides in the width direction of the two support plate parts, and capable of expanding and contracting an interval between the pressing members in the width direction.

The steering wheel position adjustment device of the present invention interposes two outer side surfaces of the displacement bracket by inner side surfaces of the two support plate parts from both sides in the width direction in a clamped state where the interval between the pressing members is contracted, and position adjustment of the steering wheel is unable.

Specifically in a case of the present invention, an inner side surface of at least one support plate part of the two support plate parts includes a pressed-part back surface, which is positioned on a back side of a portion where the outer side surface of the support plate part is pressed by the pressing member (the pressing member, which is arranged outside of the support plate part, of a pair of pressing members,).

A portion (for example, portions on both sides in the front-rear direction when the fixing-side through hole is a long through hole in the upper-lower direction, a periphery when the fixing-side through hole is a simple round hole), which is adjacent to the pressed-part back surface of the inner side surface, of the at least one support plate part is initially pressed against (brought into pressure contact with) an outer side surface of the displacement bracket when changing (switching) to a clamped state from an unclamped state where the interval between the pressing members is expanded. Further, in this state (a state where adjacent portions are pressed), the pressed-part back surface is separated from the outer side surface of the displacement bracket.

In other words, the presses-part back surface, which is positioned on the back side of a portion where the outer side surface of the support plate part is pressed by the pressing members, of the inner side surface of the at least one support plate part of the two support plate parts is separated from the outer side surface of the displacement bracket when changing to the clamped state from the unclamped state where the interval between the pressing members is expanded (at least early stage of a process of shifting from the unclamped state to the clamped state), and at least a portion adjacent to the pressed-part back surface is initially pressed against the outer side surface of the displacement bracket when changing from the unclamped state to the clamped state.

In other words, with respect to the inner side surface of the at least one support plate part of the support plate parts, the pressed-part back surface is different from the portion initially pressed against the outer side surface of the displacement bracket when changing from the unclamped state to the clamped state.

In a case where the present invention is implemented, for example, the portion, which is adjacent to the pressed-part back surface, of the inner side surface of each of the two support plate parts is initially pressed against the outer side surface of the displacement bracket when changing from the unclamped state to the clamped state. Further, in this state, the pressed-part back surface is separated from the outer side surface of the displacement bracket.

In this case, preferably, the pressed-part back surface starts to be pressed against the outer side surface of the displacement bracket slightly before completely shifting to the clamped state, and in a stage when completely shifting to the clamped state, a contact pressure between the pressed-part back surface and the outer side surface of the displacement bracket and a contact pressure between the portion adjacent to the pressed-part back surface of the inner side surface of the support plate part and the outer side surface of the displacement bracket are almost the same.

In a case where the present invention is implemented, for example, the pressed-part back surface of the inner side surface of the support plate part is pressed against the outer side surface of the displacement bracket in the clamped state.

Alternatively, it is also possible that the pressed-part back surface of the inner side surface of the support plate part is not brought into contact with the outer side surface of the displacement bracket (a gap is still provided between the pressed-part back surface and the outer side surface of the displacement bracket).

In a case where the present invention is implemented, for example, when changing from the unclamped state to the clamped state, portions, which are positioned on both sides the pressed-part back surfaces and interpose the pressed-part back surfaces, of the inner side surfaces of the support plate parts may be initially pressed against the outer side surfaces of the displacement bracket.

In a case where the present invention is implemented, for example, when changing from the unclamped state to the clamped state, portions of the inner side surfaces of the support plate parts on both sides in the front-rear direction of the pressed-part back surfaces may be initially pressed against the outer side surfaces of the displacement bracket.

In a case where the invention as described above is implemented, for example, an adjustment rod is inserted, in the width direction, into a displacement-side through hole which is formed in the displacement bracket and is long hole in the front-rear direction, and into fixing-side through holes which are formed in the two support plate parts.

The two pressing members are provided on portions, which protrude from the outer side surfaces of the two support plate parts, of the adjustment rod.

In an entire range in a case that the adjustment rod is displaced from a front end edge to a rear end edge inside the displacement-side through hole (regardless of the positions in the front-rear direction inside the displacement-side through hole of the adjustment rod), when changing from the unclamped state to the clamped state, portions of the inner side surfaces of the support plate parts on both sides of the pressed-part back surfaces in the front-rear direction are initially pressed against the outer side surfaces of the displacement bracket.

Furthermore, when the invention as described above is implemented, for example, an adjustment rod is inserted, in the width direction, into a displacement-side through hole which is formed in the displacement bracket, and into fixing-side through holes which are formed in the two support plate parts and are long holes in the upper-lower direction.

The two pressing members are provided on portions, which protrude from the outer side surfaces of the two support plate parts, of the adjustment rod.

In an entire range in a case that the adjustment rod is displaced from an upper end edge to a lower end edge inside the fixing-side through holes (regardless of positions in the upper-lower direction inside the fixing-side through holes of the adjustment rod), when changing from the unclamped state to the clamped state, portions of the inner side surfaces of the support plate parts on both sides of the pressed-part back surfaces in the front-rear direction are initially pressed against the outer side surfaces of the displacement bracket.

In a case where the invention as described above is implemented, for example, slits may be formed to the support plate parts above portions, where the outer side surfaces of the support plate parts are pressed by the pressing members, of support plate parts, and the silts may be longer than the portions, where the outer side surfaces of the support plate parts are pressed by the pressing members, of the support plate parts.

Since such silts are formed, the two support plate parts can be easily deformed even when the adjustment rod is displaced to an upper end portion of the fixing-side through holes and clamped. Accordingly, regardless of the upper-lower position (tilt position) of the adjustment rod, during clamping, the pressed-part back surface can be securely brought into contact with the outer side surface of the displacement bracket, and the operation force of the adjustment lever can be constant.

When such an invention is implemented, for example, broad parts, of which lower end edges are positioned below intermediate portions of the silts in the front-rear direction, are provided on end portions of the silts in the front-rear direction.

When changing from the unclamped state to the clamped state, portions, which is closer to the fixing-side through holes than the broad parts in the front-rear direction, of the inner side surfaces of the support plate parts may be initially pressed against the outer side surfaces of the displacement bracket.

In a case where the present invention is implemented, for example, a pair of protrusion parts which protrude inward in the width direction from the pressed-part back surface in a free state may be provided on portions, which interpose the pressed-part back surface and are positioned on both sides (for example, both sides in front-rear direction), of inner side surfaces of the support plate parts,.

Alternatively, in a case where the displacement-side through holes formed in the displacement bracket are simple circular holes, a pair of protrusion parts which protrude outward in the width direction may be provided on portions, which are on both sides in the front-rear direction and interpose the displacement-side through hole, of the outer side surfaces of the displacement bracket.

In any case, a shape of the tip end surface (an inner end surface in the width direction) of each protrusion part may have a flat surface (including an oblique surface) shape, and may have a convex arc shaped cross section.

Furthermore, in a case where the present invention is implemented, for example, the inner side surface of the support plate part and the outer side surface of the displacement may be brought into contact with each other via a sandwiched member made of an elastic material, such as a rubber plate or a synthetic resin plate.

### EFFECT OF THE INVENTION

According to a steering wheel position adjustment device of the present invention configured as described above, it is possible to ensure a large contact area between the inner side surfaces of the support plate parts configuring the support bracket and the outer side surfaces of the displacement bracket, and enhance the support rigidity of the displacement bracket with respect to the support bracket.

That is, in a case of the present invention, a portion adjacent to the pressed-part back surface, which is positioned on the back side of a portion where the outer side surface of the support plate part is pressed by the pressing member, of the inner side surface of the support plate part is initially pressed against the outer side surface of the displacement bracket when changing from the unclamped state to the clamped state. In this state, the pressed-part back surface is separated from the outer side surface of the displacement bracket.

Therefore, in a case of the present invention, in the clamped state, at least a portion of the inner side surface of the support plate part adjacent to the pressed-part back surface can be pressed against the outer side surface of the displacement bracket.

Therefore, as compared with a case where only the pressed-part back surface on the inner side surface of the support plate part is pressed against the outer side surface of the displacement bracket and the other part is warped and deformed as in a case of a conventional structure described above, it is possible to ensure a large contact area between the inner side surface of the plate part and the outer side surface of the displacement bracket and enhance the support rigidity of the displacement bracket with respect to the support bracket.

### BRIEF DESCRIPTION OF THE DRAWINGS

FIG. 1 is a partial side view of a steering device illustrating a state in which a steering wheel is positioned at an intermediate portion in a front-rear direction and an upper-lower direction according to a first embodiment of the present invention.
FIG. 2 is a cross-sectional view along a line A-A of FIG. 1.
FIGS. 3A and 3B is a cross-sectional view along a line B-B of FIG. 2, FIG. 3A illustrates an unclamped state, and FIG. 3B illustrates a clamped state.
FIGS. 4A and 4B is a cross-sectional view along a line C-C of FIG. 2, FIG. 4A illustrates an unclamped state, and FIG. 4B illustrates a clamped state.
FIGS. 5A to 5C are views corresponding to FIG.1 and illustrate three examples in which a steering wheel is respectively displaced from a front-rear intermediate portion to an upper end edge, an upper-lower intermediate portion, and a lower end edge.
FIGS. 6A to 6C are views corresponding to FIG. 1 and illustrate three examples in which a steering wheel is respectively displaced from an upper-lower intermediate portion to a rear end edge, a front-rear intermediate portion, and a front end edge.

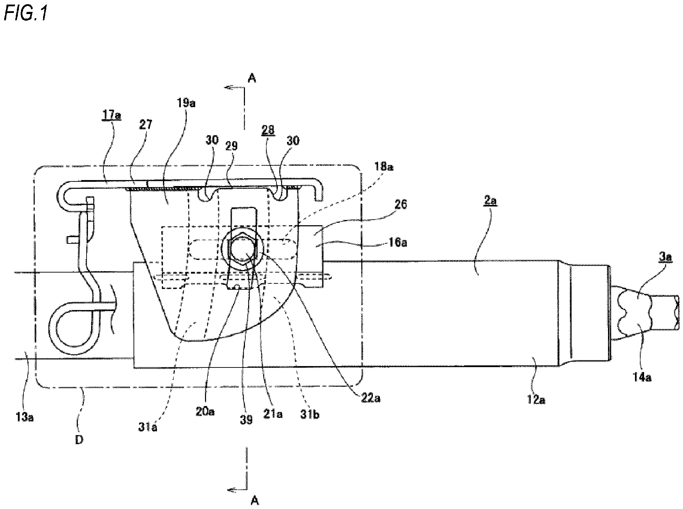

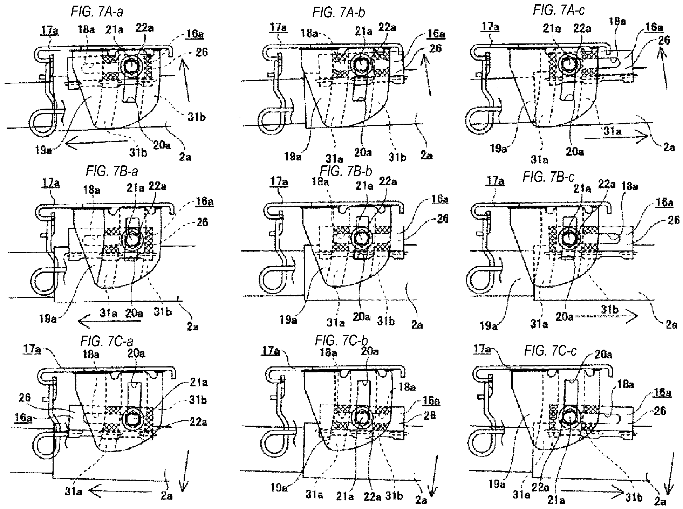

FIGS. 7A-a to 7C-c are views corresponding to D portion of FIG. 1 and illustrate nine examples in which a steering wheel is respectively displaced in a front-rear direction and an upper-lower direction.

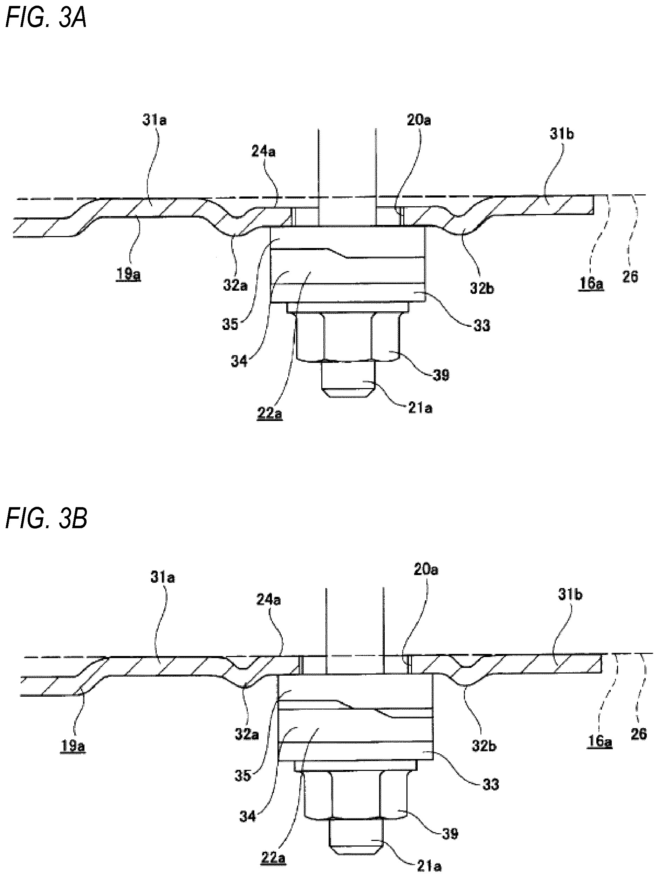

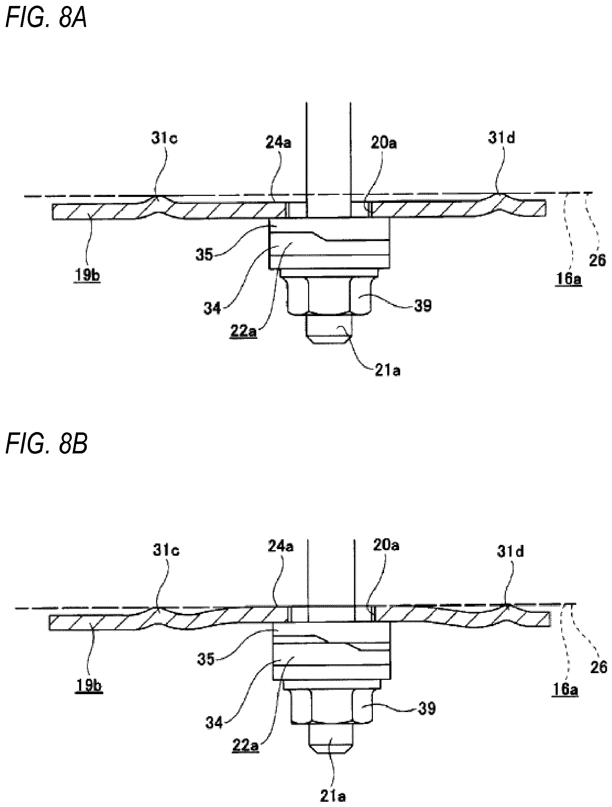

FIGS. 8A and 8B are views corresponding to FIG. 3A and FIG. 3B and illustrate a second embodiment of the resent invention.

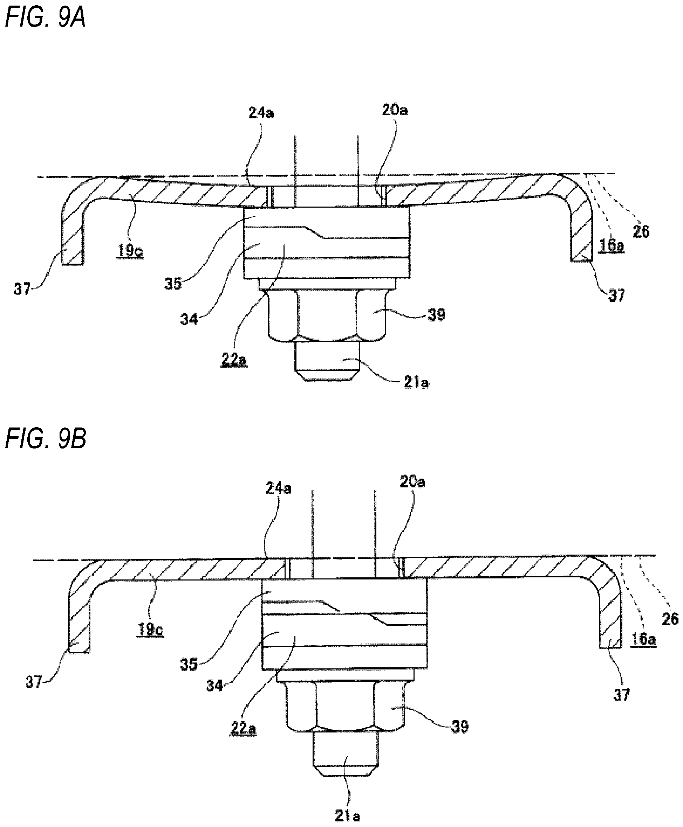

FIGS. 9A and 9B are views similar to FIG. 3A and FIG. 3B and illustrate a third embodiment of the resent invention.

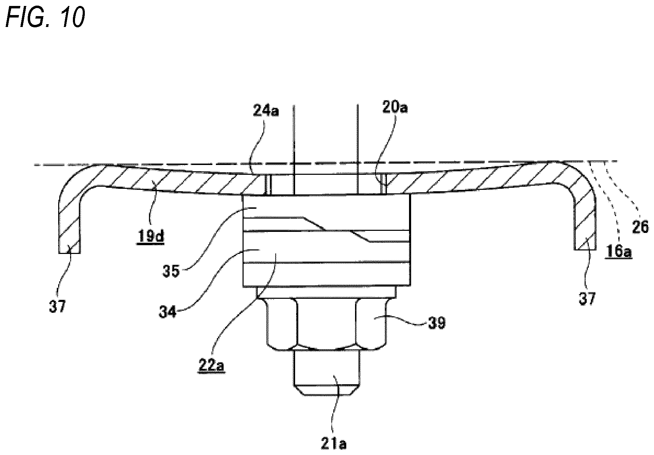

FIG. 10 is a view corresponding to FIG. 9B and illustrates a fourth embodiment of the resent invention.

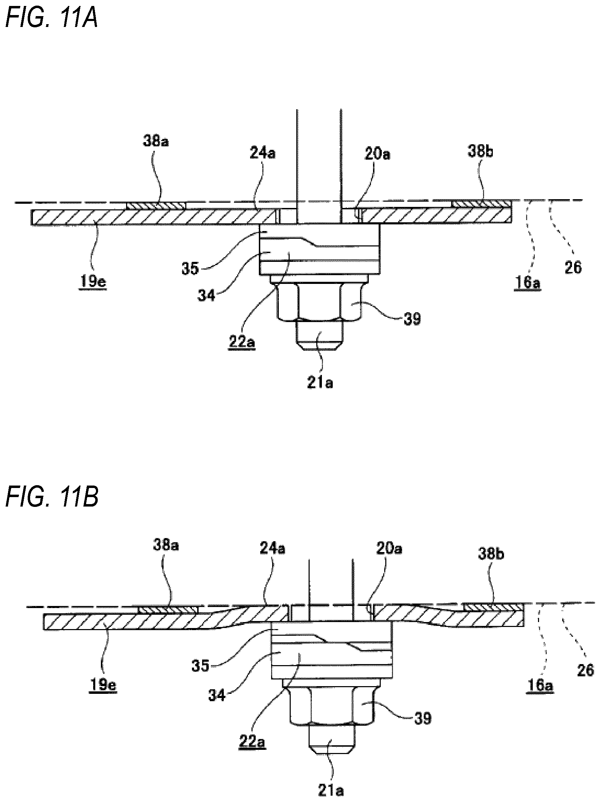

FIGS. 11A and 11B are views corresponding to FIG. 3A and FIG. 3B and illustrate a fifth embodiment of the resent invention.
FIG. 12 is a view illustrating an example of a steering device for automobiles including a position adjusting device of a steering wheel as an object of the present invention.
FIG. 13 is a view corresponding to FIG. 3B and illustrating problems of a conventional structure.

### DESCRIPTION OF EMBODIMENTS

### [FIRST EMBODIMENT]

A first embodiment of the present invention will be described with reference to FIGS. 1 to 7. In a steering device of the embodiment, a steering shaft 3a in which a steering wheel 4 (refer to FIG. 12) is fixed on a rear end portion the steering shaft 3a is rotatably supported to an inner side of a tubular steering column 2a. An intermediate portion of the steering column 2a is supported to a support bracket 17a. The support bracket 17a is supported to a vehicle body 1 (refer to FIG. 12) so as to be able to be detached forward by a secondary collision due to a collision accident. A gear housing 25 (refer to FIG. 12) for electric power steering device is connected and fixed to a front end portion of the steering column 2a. The gear housing 25 is supported to the vehicle body 1 so as to be pivotably displaceable about a pivot shaft 11 (refer to FIG. 12) into which the gear housing 25 is inserted, and configures a tilt mechanism capable of adjusting an upper-lower position of the steering wheel 4. Furthermore, in a case of the embodiment, in addition to the tilt mechanism, a telescopic mechanism for adjusting a front-rear position of the steering wheel 4 is also incorporated.

In order to configure the telescopic mechanism, the steering column 2a is configured such that a front portion of an outer column 12a is externally fitted to a rear portion of an inner column 13a so as to be relatively displaceable in an axial direction. A displacement bracket 16a having a substantially U-shaped cross section which is formed by bending a metal plate having sufficient rigidity, such as a steel plate, is fixed to an upper portion of a front end side portion of the outer column 12a by welding and the like. In a pair of flat plate shaped side plate parts 26, 26 which are parallel to each other and configure both end portions in a width direction of the displacement bracket 16a, displacement-side through holes 18a, 18a which are respectively long in a front-rear direction (an axial direction of the outer column 12a) are formed on portions which overlap with each other in the width direction. Furthermore, the steering shaft 3a is configured such that a front portion of an outer shaft 14a is externally fitted to a rear portion of an inner shaft 15 (refer to FIG. 12) by a spline engagement and the like so as to capable of transmitting torque and to relatively displaceable.

A support bracket 17a is formed by connecting a plurality of parts, each of which is made of a metal plate having sufficient rigidity, such as a steel plate, by welding and the like. The support bracket 17a includes a mounting plate part 27 for supporting on the vehicle body 1, and a pair of support plate parts 19a, 19a fixed to a lower surface of the mounting plate part 27 by welding and separated in parallel to each other in the width direction. Outer side surfaces of two side plate parts 26, 26 configuring the displacement bracket 16a are interposed therebetween from both sides in the width direction by the two support plate parts 19a, 19a. On the two support plate parts 19a, 19a, fixing-side through holes 20a, 20a having partial arc shape having the pivot shaft 11 as a center are formed in portions which overlap with each other in the width direction.

Specifically, in a case of the embodiment, substantially U-shaped slits 28, 28 which are long in the front-rear direction are formed on upper end edge portions of the support plate parts 19a, 19a which are positioned above the fixing-side through holes 20a, 20a. The silts 28, 28 are configured by a width-narrowed part 29 having a linear shape provided on an intermediate portion in the front-rear direction and a pair of broad parts 30, 30 each having substantially semicircular shape provided on both end portions in the front-rear direction. Lower end edges of the broad parts 30, 30 are positioned lower than a lower end edge of the width-narrowed part 29. In a case of the embodiment, portions, which are distant in the front-rear direction from portions where the slits 28, 28 are formed, of upper end edges of the support plate parts 19a, 19a are welded and fixed to a lower surface of the mounting plate part 27.

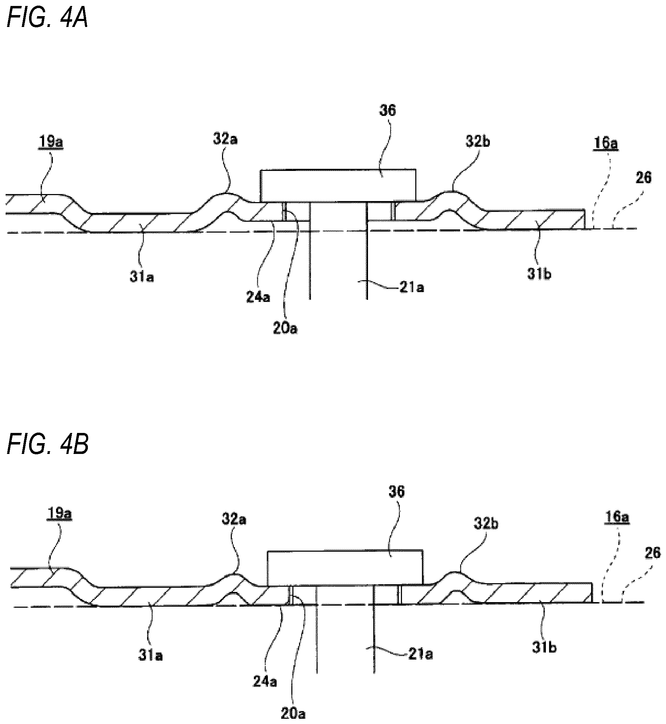

Protrusion parts 31a, 31b, each having a strip shape which protrude (offset) inward in the width direction from portions where the fixing-side through holes 20a, 20a are formed, are provided on portions on both sides in the front-rear direction which interpose the fixing-side through holes 20a, 20a on the support plate parts 19a, 19a in a free state. Each of the protrusion parts 31a, 31b is formed in a partial arc shape having the pivot shaft 11 as a center similar to the fixing-side through holes 20a, 20a, and formed by pressing in an entire range from the upper end edge to the lower end edge of the support plate part 19a, 19a. Accordingly, upper end portions of the protrusion parts 31a, 31b are provided in a state of surrounding the broad parts 30, 30 respectively. Tip end surfaces (inner side surfaces) of the protrusion parts 31a, 31b are formed in a flat surface shape respectively and positioned in a same plane with each other. As shown in FIGS. 3 and 4, on the support plate parts 19a, 19a, a pair of bending part parts 32a, 32b having substantially V-shaped cross sections which protrudes outward in the width direction are provided between portions where the fixing-side through holes 20a, 20a are formed and the protrusion parts 31a, 31b. On the support plate parts 19a, 19a, a portion between the bending parts 32a, 32b where the fixing-side through holes 20a, 20a are formed is configured to a flat surface shape, width dimension thereof in the front-rear direction is set to be slightly larger than width dimensions in the front-rear direction of a driven-side cam 35 and a flange part 36 described later.

In a state where a portion of the fixing-side through hole 20a, 20a and a portion of the displacement-side through hole 18a, 18a are superimposed in the width direction, an adjustment rod 21a is inserted into these through holes 18a, 20a. An interval between the support plate parts 19a, 19a can be expanded and contracted by an expansion/contraction mechanism including the adjustment rod 21a. In order to configure such an expansion/contraction mechanism, a base end portion of an adjustment lever 33 is connected and fixed to a portion protruding from an outer side surface of one support plate part 19a (the left one of FIG. 2) of the support plate parts 19a, 19a on a tip end portion of the adjustment rod 21a (the left end portion of FIG. 2, the lower end portion of FIG. 3), and a cam device 22a is provided between the outer side surface of the one support plate part 19a and the adjustment lever 33. Dimension in axial direction of the cam device 22a is expanded/contracted in the axial direction based on relative displacement between a drive-side cam 34 and a driven-side cam 35, and the driven-side cam 35 is engaged with the fixing-side through hole 20a formed in the one support plate part 19a so that the driven-side cam 35 is only displaceable along the fixing-side through hole 20a (with rotation thereof being restricted). The drive-side cam 34 is rotatable around the adjustment rod 21a by the adjustment lever 33. A nut 39 is screwed to the tip end portion of the adjustment rod 21a to prevent the cam device 22a and the like from slipping off. In contrast, a flange part 36 having an outward flange shape is fixedly provided on a base end portion (the right end portion of FIG. 2, the upper end portion of FIG. 4) of the adjustment rod 21a, and on a portion protruding from an outer side surface of the other support plate part (the right one of FIG. 2) of the two support plate parts 19a, 19a. The flange part 36 is engaged with the fixing-side through hole 20a formed in the other support plate part 19a to be only displaceable along the fixing-side through hole 20a. In a case of the embodiment having such a configuration, the driven-side cam 35 and the flange part 36 correspond to a pair of pressing members of the present invention.

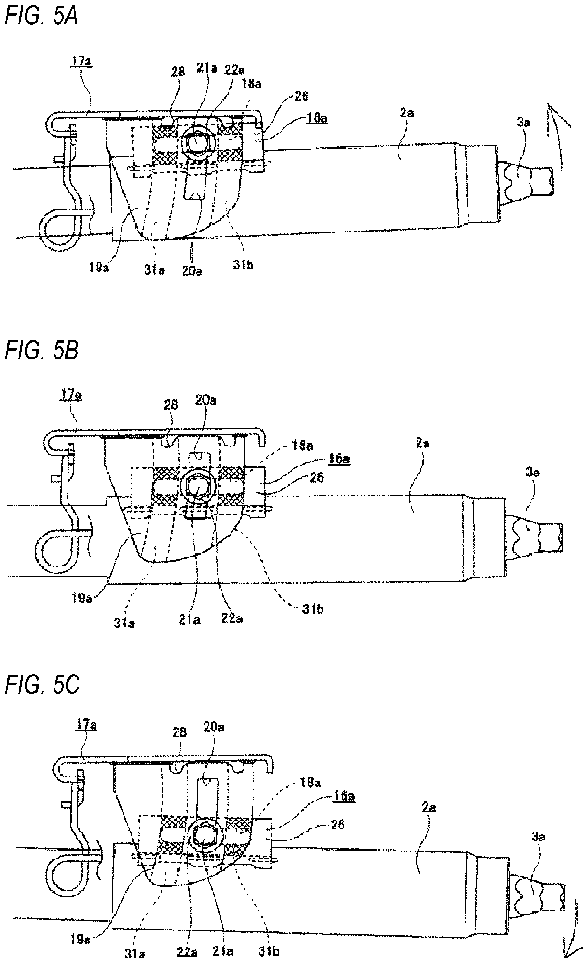

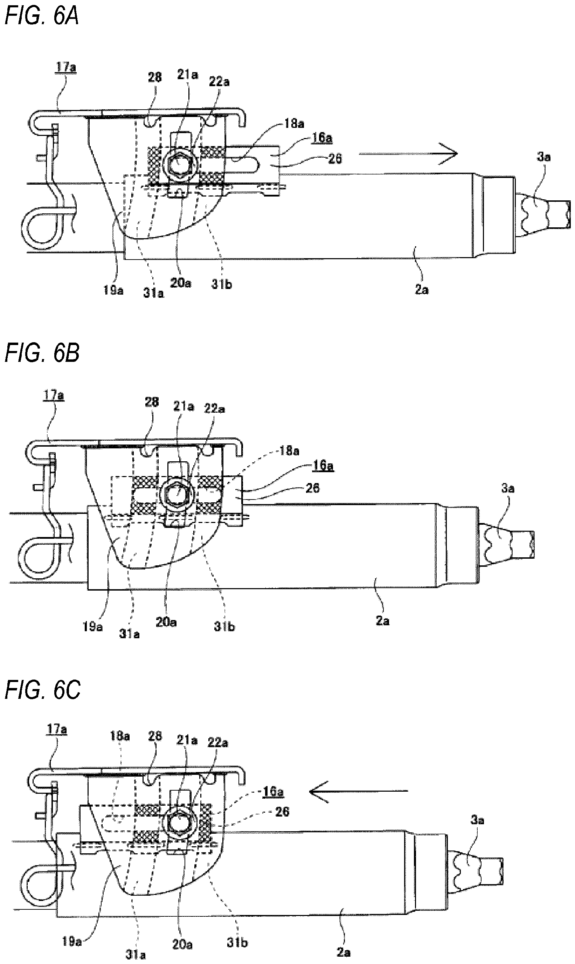

In a structure of the embodiment including such a tilt mechanism and a telescopic mechanism, as shown in FIGS. 5A to 5C, the adjustment rod 21a can adjust an upper-lower position of the steering wheel 4 within a range displaceable in the fixing-side through holes 20a, 20a. As shown in FIGS. 6A to 6C, the adjustment rod 21a can adjust a front-rear position of the steering wheel 4 within a range displaceable in the displacement-side through holes 18a, 18a. During the adjustment operation, the adjustment lever 33 is pivotably displaced downward (or upward), and axial dimension of the cam device 22a is contracted. Accordingly, the interval between the driven-side cam 35 and the flange part 36 which are a pair of pressing members is expanded so as to be an unclamped state. In this state, the contact pressure of contact portion between the inner side surfaces of the both support plate portions 19a, 19a and the outer side surfaces of the both side plate parts 26, 26 is reduced or lost so that the adjustment operation can be performed with a light force. On the other hand, in order to hold the steering wheel 4 at the adjusted position, after the steering wheel 4 is moved to a desired position, the adjustment lever 33 is pivotably displaced upward (or downward) to expand the axial dimension of the cam device 22a. As a result, the interval between the driven side cam 35 and the flange part 36 is contracted so as to be a clamped state. In this state, a surface pressure between contact portions is increased, and the steering wheel 4 can be held on an adjusted position.

Specifically, in a case of the embodiment, when changing (switching) from an unclamped state to a clamped state, as shown in FIG. 3A, on the inner side surface of the one support plate part 19a, the tip end surfaces of the two protrusion parts 31a, 31b, which are positioned on both sides in the front-rear direction and interpose a pressed-part back surfaces 24a therebetween which is positioned on a back side of a portion where the outer side surface of the support plate part 19a is pressed by the driven-side cam 35, are initially pressed against the outer side surfaces of the side plate parts 26 of the displacement bracket 16a. In this state (a state where the tip end surfaces of the protrusion parts 31a, 31b are pressed against the outer side surfaces of the side plate parts 26), the pressed-part back surfaces 24a are separated from the outer side surfaces of the side plate parts 26. That is, until a halfway stage of the process of shifting from the unclamped state to the clamped state, the pressed-part back surface 24a is not pressed against the outer side surface of the side plate part 26. In FIGS. 5A to 7C-c, on the inner side surface of the one support plate part 19a and the outer side surface of the side plate part 26 facing each other when changing from the unclamped state to the clamped state, contact portions between the tip end surfaces of the protrusion parts 31a, 31a and the outer side surfaces of the side plate parts 26 which are the initially contacted portions are represented by inclined line lattice patterns. In a clamped state where an axial dimension of the cam device 22a is expanded and the interval between the driven-side cam 35 and the flange part 36 is contracted, as shown in FIG. 3B, the tip end surfaces of the protrusion parts 31a, 31b remain being brought into contact with the outer side surfaces of the side plate parts 26, and the two bent parts 32a, 32b are elastically deformed by pressure force through the driven-side cam 35, so that the pressed-part back surfaces 24a are pressed against the outer side surfaces of the side plate parts 26. In a case of the embodiment, the pressed-part back surfaces 24a are pressed against the outer side surfaces of the side plate parts 26 slightly before completely shifting to the clamped state. At the stage of completely shifting to the clamped state, it is ensured that the contact pressure between the pressed-part back surfaces 24a and the outer side surfaces of the displacement bracket 16a and the contact pressure between the tip end surfaces of the protrusion parts 31a, 31a and the outer side surfaces of the displacement bracket 16 are almost the same.

With respect to the other support plate part 19a, similar to the one support plate part 19a, a contact state between the inner side surface of the other support plate part 19a and the outer side surface of the side plate part 26 is regulated. Specifically, as shown in FIG. 4A, when changing from the unclamped state to the clamped state, the tip end surfaces of the protrusion parts 31a, 31b, which interpose the pressed-part back surface 24 positioned on the back side of the portion where the outer side surface of the support plate part 19a is pressed by the flange part 36 and are positioned on both sides in the front-rear direction, of the inner side surface of the other support plate part 19a are initially pressed against the outer side surfaces of the side plate parts 26. In this state (a state where the tip end surfaces of the protrusion parts 31a, 31b are pressed against the outer side surfaces of the side plate parts 26), the pressed-part back surface 24a is separated from the outer side surface of the side plate part 26. That is, until the halfway stage of the process of shifting from the unclamped state to the clamped state, the pressed-part back surface 24a is not pressed against the outer side surface of the side plate part 26. With respect to the other support plate part 19a, the pressed-part back surface 24a is pressed against the outer side surface of the side plate part 26 slightly before completely shifted to the clamped state. At the stage of completely shifting to the clamped state, the contact pressure between the pressed-part back surface 24a and the outer side surface of the displacement bracket 16a and the contact pressure between the tip end surfaces of the protrusion parts 31a, 31a and the outer side surface of the displaced bracket 16a are almost the same.

Furthermore, in a case of the embodiment, when changing from the unclamped state to the clamped state, in an entire range when the adjustment rod 21a is displaced from the upper end edge to the lower end edge inside two fixing-side through holes 20a, 20a, the tip end surfaces of the protrusion parts 31a, 31b of the inner side surfaces of the support plate parts 19a, 19a are initially pressed against the outer side surface of the side plate part 26. In a case of the embodiment, since both silts 28, 28 are formed on the upper end edges of the support plate parts 19a, 19a such that no welding is applied to these portions, even in a state where the adjustment rod 21a is positioned on upper end edges of both fixing-side through holes 20a, 20a (a state where the steering wheel 4 is displaced upward), the tip end surfaces of the protrusion parts 31a, 31a are reliably brought into contact with the outer side surfaces of the side plate parts 26, 26. Since a forming position and a width dimension in the front-rear direction of each of the protrusion parts 31a, 31b are appropriately regulated, within an entire range where the adjustment rod 21a is displaced from the front end edge to the rear end edge inside the displacement-side through holes 18a, 18a, when changing from the unclamped state to the clamped state, the tip end surfaces of the protrusion parts 31a, 31b of the inner side surfaces of the support plate parts 19a, 19a are initially pressed against the outer side surfaces of the side plate parts 26, 26. Specifically, in a case of the embodiment, upper end portions of the protrusion parts 31a, 31b are provided in a state of surrounding the broad parts 30, 30. Therefore, when changing from the unclamped state to the clamped state, as two support plate parts 19a, 19a are elastically deformed, portions (rear end side portion of protrusion part 31a provided on a front side and front end side portion of the protrusion part 31b provided on a rear side), which is closer to the fixing-side through holes 20a, 20a than the broad parts 30, 30 in the front-rear direction, of the tip end surfaces of the protrusion parts 31a, 31b are initially and reliably pressed against the outer side surfaces of the side plate parts 26, 26.

Therefore, in the embodiment, as shown in FIG. 3A, the inner side surfaces of the support plate parts 19a, 19a are provided with the pressed-part back surfaces 24a, 24a and the tip end surfaces of the two protrusion parts 31a, 31b. The pressed-part back surfaces 24a, 24a are positioned on the back sides of portions where the outer side surfaces of the support plate parts 19a, 19a are pressed by the driven-side cam 35 and the flange part 36 in a state of surrounding the fixing-side through holes 20a, 20a. The tip end surfaces of the two protrusion parts 31a, 31b interposes the pressed-part back surfaces 24a, 24a and are positioned on both sides in the front-rear direction.

In a free state, that is, an unclamped state where the interval between the driven-side cam 35 and the flange part 36 is expanded, the tip end surfaces of the two protrusion parts 31a, 31b are positioned inward in the width direction from the pressed-part back surfaces 24a, 24a, that is, closer to the outer side surfaces of the displacement brackets 16a, 16a.

In a case of a steering device of the embodiment having the above structure, in the clamped state, it is possible to ensure the large contact area of the inner side surfaces of the two support plate parts 19a, 19a configuring the support bracket 17a and the outer side surfaces of the two side plate parts 26, 26 configuring the displacement bracket 16a, and enhance the support rigidity of the displacement bracket 16a with respect to the support bracket 17a. Regardless of an adjustment position of the steering wheel 4 by the tilt mechanism and the telescopic mechanism, the contact area is substantially constant, and stable holding force can be obtained.

In a case of the embodiment, the tip end surfaces of the protrusion parts 31a, 31b, which interpose the pressed-part back surfaces 24a, 24a positioned on the back sides of portions where the outer side surfaces of the support plate parts 19a, 19a are pressed by the driven-side cam 35 and the flange part 36 which are pressing members and which are positioned on both sides in the front-rear direction, of the inner side surfaces of the two support plate parts 19a, 19a are initially pressed on the outer side surfaces of the two side plate parts 26, 26 when changing from the unclamped state to the clamped state. In this state, the pressed-part back surfaces 24a, 24a are separated from the outer side surfaces of the side plate parts 26, 26. In other words, when changing from the unclamped state to the clamped state (until the halfway stage of the process of shifting from the unclamped state to the clamped state), the pressed-part back surfaces 24a, 24a are separated from the outer side surfaces of the two side plate parts 26, 26. When changing from the unclamped state to the clamped state, the tip end surfaces of the protrusion parts 31a, 31b are initially pressed against the outer side surfaces of the two side plate parts 26, 26 Specifically, the bending parts 32a, 32b are elastically deformed in accordance with a transition from a state where the outer side surfaces of the two side plate parts 26, 26 contact with only the tip end surfaces of the protrusion parts 31a, 31b to a clamped state where the adjustment lever 33 is operated (the dimension of the cam device in the axial direction is expanded), so that the pressed-part back surfaces 24a, 24a are pressed against the outer side surfaces of the side plate parts 26, 26. In a case of the embodiment, in the clamped state, the tip end surfaces of the protrusion parts 31a, 31b and the pressed-part back surfaces 24a, 24a of the inner side surfaces of the support plate parts 19a, 19a can be pressed against the outer side surfaces of the side plate parts 26, 26. Therefore, compared with the above-described conventional structure where only the pressed-part back surfaces are pressed against the outer side surfaces of the displacement brackets and the other portions are warped and deformed, it is possible to ensure large contact area of the inner side surfaces of the support plate parts 19a, 19a and the outer side surfaces of the side plate parts 26, 26, and enhance the support rigidity of the displacement bracket 16a with respect to the displacement bracket 17a.

In a case of the embodiment, two slits 28, 28 which are longer than the pressed portion in the front-rear direction are formed on upper end edges of portions, where the outer side surfaces are pressed by the driven-side cam 35 and the flange part 36, of the two support plate parts 19a, 19a. Accordingly, even in a case where the adjustment rod 21a is displaced to the upper section in the fixing-side through holes 20a, 20a, the support plate parts 19a, 19a can be easily elastically deformed during clamping, and the pressed-part back surfaces 24a, 24a can be reliably brought into contact with the outer side surfaces of the side plate parts 26, 26. Therefore, in a case of the embodiment, regardless of the upper-lower position (tilt position) of the adjustment rod 21a, during clamping, the pressed-part back surfaces 24a, 24a can be reliably brought into contact with the outer side surfaces of the side plate parts 26, 26 and the operation force of the adjustment lever 33 can be constant.

### [SECOND EMBODIMENT]

A second embodiment of the present invention will be described with reference to FIGS. 8A and 8B. In a case of the embodiment, protrusion parts 31c, 31d each having a strip shape are formed on portions of the support plate parts 19b on both sides in a front-rear direction and interposing the fixing-side through holes 20a. In a free state, protrusion parts 31c, 31d protrude (offset) inward in a width direction from portions where fixing-side through holes 20a are formed. Specifically, in a case of the embodiment, tip end surfaces of the two protrusion parts 31c, 31d have convex shaped cross sections and protrude inward in the width direction.

In a case of the embodiment having such a configuration, as shown in FIG. 8A, when changing from an unclamped state to a clamped state, tip end surfaces of the protrusion parts 31c, 31d, which interpose pressed-part back surfaces 24a positioned on back sides of portions where outer side surfaces of the support plate parts 19b are pressed by a driven-side cam 35 and are positioned on both sides in the front-rear direction, of inner side surfaces of the support plate parts 19b are initially pressed against outer side surfaces of the side plate parts 26 of the displacement bracket 16a. In this state, the pressed-part back surfaces 24a are separated from the outer side surfaces of the side plate parts 26. In a clamped state where an axial dimension of a cam device 22a is expanded and an interval between the driven-side cam 35 and a flange part 36 (refer to FIG. 2) is contracted, as shown in FIG. 8B, since tip end surfaces of the protrusion parts 31c, 31d remain being brought into contact with the outer side surfaces of the side plate parts 26 and portions between the protrusion parts 31c, 31 c are elastically deformed, the pressed-part back surfaces 24a are pressed against the outer side surfaces of the side plate parts 26.

In a case of the embodiment having such a configuration, compared with the case of the first embodiment described above, it is possible to reduce bending process applied to the support plate parts 19b. Therefore, it is advantageous of reducing the manufacturing cost of the steering device.

Other configuration and operational effects are similar to those of the first embodiment.

### [THIRD EMBODIMENT]

A third embodiment of the present invention will be described with reference to FIGS. 9A and 9B. In a case of the embodiment, a pair of protrusion parts is not formed on support plate parts 19c like the first and second embodiments described above. The support plate parts 19c are curved in a free state such that intermediate portions (portions where fixing-side through holes 20a are formed) in a front-rear direction protrude outward in the width direction from portions at both sides in the front-rear direction. The support plate parts 19c are provided with folding parts 37, 37 bent outward in a width direction on both end portions in the front-rear direction.

In a case of the embodiment having such a configuration, as shown in FIG. 9A, when changing from an unclamped state to a clamped state, inner side surfaces of base end portions of the folding parts 37, 37, which interpose the pressed-part back surfaces 24a positioned on back sides of portions where the outer side surfaces of the support plate parts 19c are pressed by a driven-side cam 35 and are positioned at both sides in the front-rear direction, of inner side surfaces of the support plate parts 19c are initially pressed against outer side surfaces of side plate parts 26 of a displacement bracket 16a. In this state, the pressed-part back surfaces 24a are separated from the outer side surfaces of the side plate parts 26. In a clamped state where an axial dimension of a cam device 22a is expanded and an interval between the driven-side cam 35 and a flange part 36 (refer to FIG. 2) is contracted, as shown in FIG. 9B, since the inner side surfaces on base end portions of the folding parts 37, 37 remain being brought into contact with the outer side surfaces of the side plate parts 26 and portions between the folding parts in the front-rear direction on the support plate parts 19c are elastically deformed into flat surface shapes, all portions including the pressed-part back surfaces 24a are pressed against the outer side surfaces of the side plate parts 26.

In a case of the embodiment having such a configuration, compared with the case of the first embodiment described above, it is possible to reduce bending process to be applied to the support plate parts 19c. To this end, it is advantageous in terms of reducing the manufacturing cost.

Other configuration and operational effects are the same as those in the first embodiment.

### [FOURTH EMBODIMENT]

A fourth embodiment of the present invention will be described with reference to FIG. 10. In a case of the embodiment, shapes of support plate parts 19d have same shapes as those of the support plate parts 19c of the third embodiment described above. However, in a case of the embodiment, even in a clamped state where an axial dimension of a cam device 22a is expanded and an interval between a driven-side cam 35 and a flange part 36 (refer to FIG. 2) is contracted, only inner side surfaces on base end portions of folding parts 37, 37 are pressed against outer side surfaces of side plate parts 26. In contrast, the pressed-part back surfaces 24a, which are positioned on back sides of portions where outer side surfaces of support plate parts 19d are pressed by the driven-side cam 35, of inner side surfaces of the support plate parts 19d, are not pressed against the outer side surfaces of the side plate parts 26. That is, even in a clamped state, gaps between the pressed-part back surfaces 24a and the outer side surfaces of the side plate parts 26 are provided.

In a case of the embodiment having such a configuration, although it is disadvantageous from the viewpoint of increasing the contact area between the inner side surface of the support plate part 19d and the outer side surface of the side plate part 26, it is possible to select a metal plate having high rigidity as a metal plate configuring the support plate part 19d, so that it is possible to increase the support rigidity of the displacement bracket 16a with respect to the support bracket 17a.

Other configuration and operational effects are the same as those in the first and third embodiments.

### [FIFTH EMBODIMENT]

A fifth embodiment of the present invention will be described with reference to FIGS. 11A and 11B. In a case of the embodiment, both of inner side surfaces of support plate parts 19e and outer side surfaces of side plate parts 26 configuring a displacement bracket 16a are formed in a flat surface shape. In a case of the embodiment, a pair of resin plates 38a, 38b each of which has a partial arc shape having a pivot shaft 11 as a center (refer to FIG. 12) is sandwiched between the inner side surfaces of the support plate parts 19e and the outer side surfaces of the side plate parts 26. More specifically, the resin plates 38a, 38a are sandwiched between portions of the inner side surfaces of the support plate parts 19e on both sides in the front-rear direction which interpose the pressed-part back surfaces 24a and outer side surfaces of the side plate parts 26. In a case of the embodiment, synthetic resin plates can be used as these resin plates 38a, 38b and these resin plates 38a, 38b are fixed (for example, attached) to the inner side surfaces of the support plate parts 19e.

In a case of the embodiment having such a configuration, as shown in FIG. 11A, when changing from an unclamped state to a clamped state, pressed-part back surfaces 24a, which are positioned on back sides of portions where outer side surfaces of support plate parts 19e are pressed by a driven-side cam 35, of inner side surfaces of the support plate parts 19e remain being separated from outer side surfaces of side plate parts 26, and inner side surfaces of the resin plates 38a, 38b, which interpose the pressed-part back surfaces 24a and are positioned on both sides in the front-rear direction, are initially pressed against the outer side surfaces of the side plate parts 26. In a clamped state where an axial dimension of a cam device 22 is expanded and an interval between the driven-side cam 35 and a flange part 36 (refer to FIG. 2) is contracted, as shown in FIG. 11B,
since the inner side surfaces of the two resin plates 38a, 38b remain being brought into contact with the outer side surfaces of the side plate parts 26, and portions of the support plate parts 19e between a portion where the resin plates 38a, 38b are fixed in the front-rear direction are elastically deformed inward in the width direction, the pressed-part back surfaces 24a are pressed against the outer side surfaces of the side plate parts 26.

In a case of the embodiment having such a configuration, the resin plates 38a and 38b are separately required, but it is not necessary to perform the bending process to be applied to the support plate portion 19e, which is advantageous reducing the manufacturing cost.

Other configuration and operational effects are the same as those in the first embodiment.

The present invention is not limited to the embodiments described above, and modifications and improvements can be made as appropriate.

In a case where the present invention is implemented, when changing from the unclamped state to the clamped state, portions where the outer side surfaces of the displacement bracket 16a are pressed are not limited to portions which interpose the pressed-part back surfaces 24a and are positioned on both sides, and may be portions adjacent to the pressed-part back surfaces 24a.

For example, protrusion parts of the above embodiments may be arranged only on one side on portions which interpose the pressed-part back surfaces 24a and are positioned on both sides.

In a case where the present invention is implemented, with respect to the one support plate part of the pair of the support plate parts configuring the displacement bracket, when changing from the unclamped state to the clamped state, a configuration can be adopted in which portions adjacent to the pressed-part back surfaces press the outer side surfaces of the displacement bracket.

In the above embodiment, the fixing-side through holes 20a, 20a each has a partial arc shape having the pivot shaft 11 as a center, but, for example, the fixing-side through holes 20a, 20a may each have a rectangular shape extending linearly in the upper-lower direction as long as the fixing-side through holes 20a, 20a configure a tilt mechanism. In this case, the protrusion parts 31a, 31b each having a strip shape are also formed linearly in the front-rear direction.

In a case where the present invention is implemented, it is not necessary to include both the tilt mechanism and the telescopic mechanism as in the cases described in the above embodiments, and any at least one mechanism may be included.

In a case where the present invention is implemented, an outer column having the displacement bracket may be provided on the front side and the inner column may be provided on the rear side.

In the above embodiment, the expansion/contraction mechanism is configured by the cam device 22a, but the expansion/contraction mechanism of the present invention is not limited to this, for example, may be configured by a screw.

In a case where the present invention is implemented, the position of the displacement bracket may be changed downward, or the structures of the embodiments described above may be combined as appropriate.

The application is based on a Japanese Patent Application No. 2015-191604 filed on September 29, 2015, the contents of which are incorporated herein by reference.

### DESCRIPTION OF REFERENCE NUMERALS

1: vehicle body
2, 2a: steering column
3, 3a: steering shaft
4: steering wheel
5a, 5b: universal joint
6: intermediate shaft
7: steering gear unit
8: input shaft
9: tie rod
10: electric motor
11: pivot shaft
12, 12a: outer column
13, 13a: inner column
14, 14a: outer shaft
15: inner shaft
16, 16a: displacement bracket
17, 17a: support bracket
18, 18a: displacement-side through hole
19, 19a∼19e: support plate part
20, 20a: fixing-side through hole
21, 21a: adjustment rod
22, 22a: cam device
23: driven-side cam
24, 24a: pressed-part back surface
25: gear housing
26: side plate part
27: mounting plate part
28: slit
29: width-narrowed part
30: width-enlarged part
31a∼31d: protrusion part
32a, 32b: bending part
33: adjustment lever
34: drive-side cam
35: driven-side cam
36: flange part
37: folding part
38a, 38b: resin plate
39: nut

## Claims

1. A steering wheel position adjusting device comprising:
a steering column having a tubular shape and rotatably supporting a steering shaft, which supports and fixes a steering wheel at a rear end portion of the steering shaft, to an inner side of the steering column;
a displacement bracket provided to the steering column;
a support bracket having a pair of support plate parts which are supported to a vehicle body and interpose the displacement bracket therebetween from both sides in a width direction;
a pair of pressing members arranged on both sides in the width direction of the two support plate parts, and capable of expanding and contracting an interval between the pressing members in the width direction;
wherein the steering wheel position adjustment device interposes two outer side surfaces of the displacement bracket by inner side surfaces of the two support plate parts from both sides in the width direction in a clamped state where the interval between the pressing members is contracted,
wherein an inner side surface of at least one support plate part of the two support plate parts includes a pressed-part back surface, which is positioned on a back side of a portion where the outer side surface of the support plate part is pressed by the pressing member, and
wherein a portion, which is adjacent to the pressed-part back surface, of the inner side surface of the at least one support plate part is initially pressed against an outer side surface of the displacement bracket when changing to a clamped state from an unclamped state where the interval between the pressing members is expanded, and in this state, the pressed-part back surface is separated from the outer side surface of the displacement bracket.

2. The steering wheel position adjusting device according to claim 1,
wherein the portion, which is adjacent to the pressed-part back surface, of the inner side surface of each of the two support plate parts is initially pressed against the outer side surface of the displacement bracket when changing from the unclamped state to the clamped state, and in this state, the pressed-part back surface is separated from the outer side surface of the displacement bracket.

3. The steering wheel position adjusting device according to claim 1 or 2,
wherein the pressed-part back surface of the inner side surface of the support plate part is pressed against the outer side surface of the displacement bracket in the clamped state.

4. The steering wheel position adjusting device according to any one of claims 1 to 3,
wherein when changing from the unclamped state to the clamped state, portions, which are positioned on both sides of the pressed-part back surfaces and interpose the pressed-part back surfaces, of the inner side surfaces of the support plate parts is initially pressed against the outer side surfaces of the displacement bracket.

5. The steering wheel position adjusting device according to any one of claims 1 to 4,
wherein when changing from the unclamped state to the clamped state, portions of the inner side surfaces of the support plate parts on both sides in the front-rear direction of the pressed-part back surfaces are initially pressed against the outer side surfaces of the displacement bracket.

6. The steering wheel position adjusting device according to claim 5,
wherein an adjustment rod is inserted, in the width direction, into a displacement-side through hole which is formed in the displacement bracket and is long hole in the front-rear direction, and into fixing-side through holes which are formed in the two support plate parts,
wherein the two pressing members are provided on portions, which protrude from the outer side surfaces of the two support plate parts, of the adjustment rod, and
wherein in an entire range in a case that the adjustment rod is displaced from a front end edge to a rear end edge inside the displacement-side through hole, when changing from the unclamped state to the clamped state, portions of the inner side surfaces of the support plate parts on both sides of the pressed-part back surfaces in the front-rear direction are initially pressed against the outer side surfaces of the displacement bracket.

7. The steering wheel position adjusting device according to claim 5 or 6,
wherein an adjustment rod is inserted, in the width direction, into a displacement-side through hole which is formed in the displacement bracket, and into fixing-side through holes which are formed in the two support plate parts and are long holes in the upper-lower direction,
wherein the two pressing members are provided on portions, which protrude from the outer side surfaces of the two support plate parts, of the adjustment rod, and
wherein in an entire range in a case that the adjustment rod is displaced from an upper end edge to a lower end edge inside the fixing-side through holes, when changing from the unclamped state to the clamped state, portions of the inner side surfaces of the support plate parts on both sides of the pressed-part back surfaces in the front-rear direction are initially pressed against the outer side surfaces of the displacement bracket.

8. The steering wheel position adjusting device according to claim 7,
wherein slits are formed to the support plate parts above portions, where the outer side surfaces of the support plate parts are pressed by the pressing members, of support plate parts, and
wherein the silts are longer than the portions, where the outer side surfaces of the support plate parts are pressed by the pressing members, of support plate parts,.

9. The steering wheel position adjusting device according to claim 8,
wherein broad parts, of which lower end edges are positioned below intermediate portions of the silts in the front-rear direction, are provided on end portions of the silts in the front-rear direction, and
wherein when changing from the unclamped state to the clamped state, portions, which is closer to the fixing-side through holes than the broad parts in the front-rear direction, of the inner side surfaces of the support plate parts are initially pressed against the outer side surfaces of the displacement bracket.

10. The steering wheel position adjusting device according to any one of claims 1 to 9,
wherein a pair of protrusion parts, which protrude inward in the width direction from the pressed-part back surface in a free state, are provided on portions, which are adjacent to the pressed-part back surface, of the support plate parts.

11. The steering wheel position adjusting device according to any one of claims 1 to 10,
wherein the inner side surface of the support plate part and the outer side surface of the displacement are in contact with each other via a sandwiched member.
